# EUROPÄISCHE PATENTANMELDUNG

(11) **EP 1 223 537 A2**
(43) Veröffentlichungstag der Anmeldung: **17.07.2002**
(21) Anmeldenummer: 01128857.8
(22) Anmeldetag: 04.12.2001
(51) Int. Cl.: G06K 9/00, G07C 9/00

(54) **Steuerbare Anordnung mit Benutzerauthentisierung**

(30) Priorität: 09.01.2001 DE 10100617
(71) Anmelder: SIEMENS AKTIENGESELLSCHAFT, 80333 München (DE)
(72) Erfinder: Heger, Hans Jörg, 80807 München (DE); Küpper, Wolfgang, Dr., 80796 München (DE)

(57) **Zusammenfassung**

Eine steuerbare Anordnung, die durch berührungslose Erfassung eines Körperteils und/oder eines daran angeordneten Objekts steuerbar ist und bei der eine Authentisierung eines Benutzers über ein Körperteil erfolgt, ist dadurch gekennzeichnet, dass die Anordnung durch zumindest einen Teil eines Gliedes steuerbar und der Benutzer durch zumindest einen Teil eines Gliedes authentisierbar ist.

## Beschreibung

Die Erfindung betrifft eine steuerbare Anordnung, die durch berührungslose Erfassung eines Körperteils und/oder eines daran angeordneten Objekts steuerbar ist und bei der eine Authentisierung eines Benutzers über einen Körperteil erfolgt, sowie ein entsprechendes Verfahren und ein Programmprodukt.

In der Mensch-Maschine-Interaktion werden zunehmend Wege beschritten, die einer natürlichen, menschlichen Kommunikation entsprechen. Datenverarbeitungsanlagen sind nicht mehr nur graue Kästen, die über eine Tastatur oder Maus mit Befehlen kommandiert werden, sondern sie sind zunehmend in die Umgebung integriert und registrieren Befehle über Sensorsysteme.

Eine Ausführung hiervon sind gestikgesteuerte Computer, die auf Bewegungen des Menschen reagieren. Dazu werden ein Körperteil oder ein daran angeordnetes Objekt bzw. seine Bewegungen und Gesten berührungslos erfasst. Das Körperteil sind beispielsweise Lippen oder eine Hand. Gerade im letzteren Fall muss nicht unbedingt die Hand selbst berührungslos erfasst werden, sondern es genügt auch die Erfassung eines daran angeordneten Objektes zum Beispiel in Form eines Zeigestabs oder eines reflektierenden Handschuhs. Derartige Anordnungen sind zum Beispiel in US 5 533 177, US 5 751 843, US 5 828 779, EP 0 560 779 B1, EP 0 713 592 B1, EP 0 800 145 A2 und WO 98/38533 beschrieben.

In diesen Anordnungen wird beispielsweise bei einer Vortragspräsentation mit einem Beamer die Steuerung der Präsentation über Gesten ermöglicht, die die Anordnung aufnimmt und die von einer zur Anordnung gehörigen Datenverarbeitungsanlage ausgewertet werden.

Ein anderes Feld der Entwicklung ist die Verbesserung der Authentisierungsmethoden für den Benutzer einer steuerbaren Anordnung. Für viele Computeranwendungen wird eine Authentisierung des Nutzers erwartet und diese wird im Allgemeinen durch Eingabe eines Passwortes oder einer PIN über ein Nummernfeld oder eine Tastatur erreicht. Neuere Entwicklungen sind die biometrischen Verfahren. Sie verwenden charakteristische Körpermerkmale und Verhaltensweisen zur Benutzerauthentisierung.

So ist eine Anordnung bekannt, bei der ein biometrisches Personenidentifikatiossystem den Benutzer anhand von Gesicht, Stimme und der charakteristischen Lippenbewegung authentisiert.

Davon ausgehend liegt der Erfindung die Aufgabe zugrunde, die Steuerungs- und Authentisierungsmöglichkeiten von Anordnungen zu erweitern.

Diese Aufgabe wird durch eine Anordnung, ein Verfahren und ein Programmprodukt mit den Merkmalen der unabhängigen Ansprüche gelöst.

Die Steuerung der Anordnung und die Authentisierung des Benutzers erfolgt durch die menschlichen Glieder. Dabei müssen nicht unbedingt die vollständigen Glieder, also Arme und Beine einschließlich Hände und Füße, verwendet werden, sondern es genügen auch Teile davon, die für sich eine zum Steuern ausreichende Funktionalität bzw. eine zur Authentisierung ausreichende Charakteristik aufweisen.

Es ergeben sich eine Reihe von Vorteilen, wenn der Teil des Gliedes, durch den die Anordnung steuerbar ist, sich am gleichen Glied befindet wie der Teil des Gliedes, durch den der Benutzer authentisierbar ist. Vorzugsweise sind sogar beide Teile teilweise oder vollständig identisch. Der Benutzer braucht dann nämlich nur mit diesem Teil eines Gliedes mit der Anordnung in Interaktion zu treten und die Anordnung braucht umgekehrt nur diesen Teil eines Gliedes zu erfassen.

Insbesondere ist die Anordnung so ausgebildet, dass der Teil eines Gliedes eine Hand ist. Der Mensch ist es nämlich gewohnt, mit der Hand Anordnungen zu steuern, weshalb diese auch eine entsprechend hohe Funktionalität aufweist.

Weiterhin kann die Authentisierung anhand einer Handerkennung vorgenommen werden. Zur Realisierung der Handerkennung kann auf den umfassenden Stand der Technik zurückgegriffen werden, der für Handerkennungen vorhanden ist.

Entsprechend der Zielsetzung, eine natürliche Steuerung der Anlage zu erzielen, ist die Anordnung so eingerichtet, dass sie Gesten des Benutzers identifizieren und dadurch gesteuert werden kann. Solche Gesten können zum Beispiel Zeigebewegungen des Teils eines Gliedes sein, mit dem die Anordnung berührungslos steuerbar ist, aber auch Drehbewegungen oder das Halten des Teils eines Gliedes auf eine ganz bestimmte Art und Weise.

Statt oder neben der Steuerung der Anordnung kann die Identifizierung einer Geste auch zur Authentisierung des Benutzers herangezogen werden. Dazu wird der Benutzer insbesondere an einer bestimmten, nur ihm bekannten Geste erkannt oder es wird erkannt, dass der Benutzer die Geste in einer ganz bestimmten Art und Weise ausführt, wie sie so von anderen Benutzern in der Regel nicht ausgeführt wird.

Zur berührungslosen Steuerung und Authentisierung des Benutzers weist die Anordnung Aufnahmemittel zur Aufnahme zumindest eines der Teile eines Gliedes auf. Die so erstellten Aufnahmen werden an eine Datenverarbeitungsanlage weitergeleitet und dort verarbeitet, um die Steuerung und Authentisierung zu ermöglichen.

Das Aufnahmemittel weist vorzugsweise Sensormittel für elektromagnetische Wellen oder Schallwellen auf. Wenn das Aufnahmemittel beispielsweise als Videokamera ausgebildet ist, so lässt sich ein solches Sensormittel durch einen CCD-Chip realisieren.

Besonders bevorzugt ist es, wenn die Anordnung gleichartige Aufnahmemittel zur Aufnahme für den Teil eines Gliedes aufweist, durch den die Anordnung steuerbar ist, wie für den Teil eines Gliedes, durch den der Benutzer authentisierbar ist. Gleichartige Aufnahmemittel soll in diesem Zusammenhang heißen, dass die Aufnahmemittel der gleichen Gerätegattung angehören, also beispielsweise jeweils Videokameras sind. Durch eine Ausbildung mit gleichartigen Aufnahmemitteln werden auch gleichartige Datensätze erzeugt, was die Weiterverarbeitung zur Steuerung und Authentisierung in einer Datenverarbeitungsanlage wesentlich vereinfacht.

Wenn sich auch Videokameras mittlerweile ausgesprochen kostengünstig realisieren lassen, so lassen sich doch weitere Kosten einsparen, wenn zur Authentisierung und zur Steuerung dasselbe Aufnahmemittel verwendet wird.

Bei einem Verfahren zum Steuern einer Anordnung und zur Authentisierung eines Benutzers der Anordnung, bei dem die Anordnung durch berührungslose Erfassung eines Körperteils und/oder eines daran angeordneten Objekts gesteuert wird und bei dem die Authentisierung des Benutzers über ein Körperteil erfolgt, wird die Anordnung durch zumindest einen Teil eines Gliedes berührungslos gesteuert und der Benutzer durch zumindest einen Teil eines Gliedes authentisiert.

Die oben für die steuerbare Anordnung dargestellten vorteilhaften Ausführungsformen sind auch für das beanspruchte Verfahren von Vorteil, so dass dieses durch Anwendung der geschilderten Merkmale vorteilhaft ausgestaltet werden kann. Ein Programmprodukt für eine Datenverarbeitungsanlage, das Softwarecodeabschnitte enthält, mit denen eines der geschilderten Verfahren auf der Datenverarbeitungsanlage ausgeführt werden kann, lässt sich durch geeignete Implementierung des Verfahrens in einer Programmiersprache ausführen. Die Softwarecodeabschnitte werden dazu gespeichert. Dabei wird unter einem Programmprodukt das Programm eines handelbaren Produkts verstanden. Es kann in beliebiger Form vorliegen, so zum Beispiel auf Papier, einem computerlesbaren Datenträger oder über ein Netz verteilt.

Weitere wesentliche Merkmale und Vorteile ergeben sich aus der Beschreibung eines Ausführungsbeispiels anhand der Zeichnung. Dabei zeigt
- Figur 1: eine steuerbare Anordnung mit einem Benutzer, der über einen Teil eines Gliedes authentisiert wird, und
- Figur 2: die steuerbare Anordnung mit dem Benutzer, während er die Anordnung mit dem Teil eines Gliedes steuert.

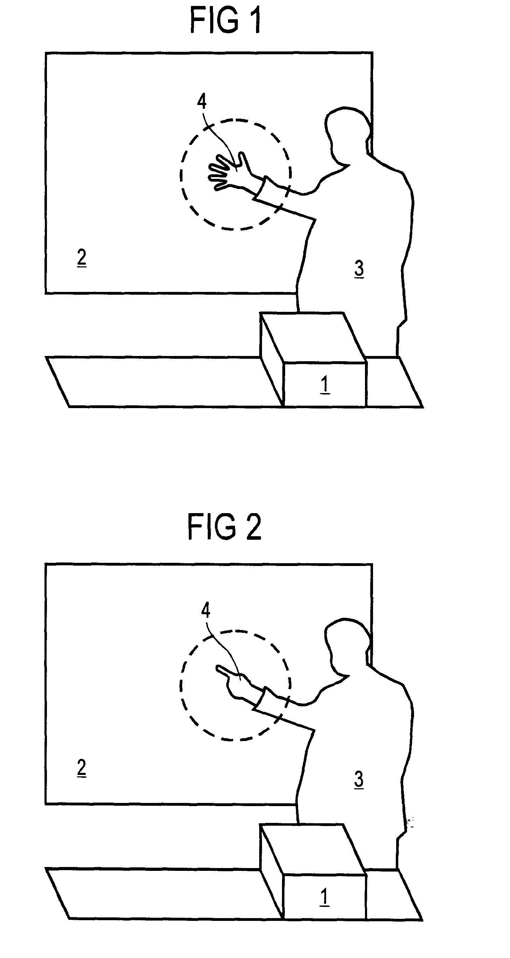

In Figur 1 erkennt man eine steuerbare Anordnung 1. Diese enthält einen Beamer, mit dem ein Bild auf eine Interaktionsfläche 2 projiziert wird. Weiterhin enthält sie eine infrarote Lichtquelle, mit der Licht in Richtung der Interaktionsfläche 2 ausgestrahlt wird. Die Interaktionsfläche 2 ist retroreflektierend ausgestaltet, so dass das infrarote Licht in hohem Maße reflektiert wird.

Ein vor der retroreflektierenden Interaktionsfläche 2 agierender Benutzer 3 schattet nun bestimmte Bereiche der retroreflektierenden Interaktionsfläche 2 ab. Im vom Benutzer abgeschatteten Bereich der retroreflektierenden Interaktionsfläche 2 wird sehr viel weniger infrarotes Licht zur steuerbaren Anordnung 1 reflektiert.

Die steuerbare Anordnung 1 weist weiterhin Aufnahmemittel mit Sensormitteln für elektromagnetische Strahlung in Form einer Videokamera mit einem CCD-Chip auf. Den Aufnahmemitteln ist ein Infrarotfilter vorgeschaltet, so dass im Wesentlichen nur von der Interaktionsfläche 2 zur steuerbaren Anordnung 1 reflektierte Infrarotstrahlung aufgenommen wird. Hierdurch werden vom Umgebungslicht herrührende Einflüsse weitestgehend ausgeschaltet. Somit nehmen die Aufnahmemittel der steuerbaren Anordnung 1 im Wesentlichen ein Schattenbild des vor der Interaktionsfläche 2 befindlichen Benutzers 3 auf.

Dieses Bild wird von den Aufnahmemitteln zu einer Datenverarbeitungsanlage weitergeleitet, die ihrerseits Teil der steuerbaren Anordnung 1 ist. Die Datenverarbeitungsanlage wertet die von den Aufnahmemitteln aufgenommenen digitalen Bilddaten mittels einer Bildverarbeitung aus. Hierzu wird zunächst die Position des Teils 4 eines Gliedes vor der Interaktionsfläche 2 bestimmt, das zur Steuerung der steuerbaren Anlage 1 und/oder zur Authentisierung des Benutzers 3 dient.

Im dargestellten Ausführungsbeispiel ist der Teil 4 eines Gliedes eine Hand und das Glied selbst ein Arm.

Ist die Position des Teils 4 eines Gliedes bestimmt, so werden aus dem Bild des Teils 4 eines Gliedes und insbesondere aus seiner Kontur in einem Segmentierungsverfahren charakteristische Merkmale extrahiert. Dabei werden insbesondere auch das Handgelenk, der Handteller und die Finger der Hand berücksichtigt. Die charakteristischen Merkmale werden mit den in einer Trainingsphase gespeicherten charakteristischen Merkmalen von einer oder mehreren authentisierbaren Personen verglichen und bei hinreichender Übereinstimmung wird der Benutzer 3 authentisiert. Die Authentisierung kann eine Verifikation oder eine Identifikation sein

Nach der Authentisierung oder unabhängig davon kann der Benutzer 3, wie in Figur 2 dargestellt, die steuerbare Vorrichtung 1 durch Gesten steuern, die er vor der Interaktionsfläche 2 ausführt. Dazu wird die Interaktionsfläche 2 weiterhin durch die steuerbare Anordnung 1 mit infrarotem Licht bestrahlt und das inverse Bild des Benutzers 3 durch die Aufnahmemittel der steuerbaren Anordnung 1 aufgenommen. Das Bild wird an die Datenverarbeitungsanlage der steuerbaren Anordnung 1 weitergeleitet und dort ausgewertet.

Die Steuerung der steuerbaren Anordnung 1 durch den Benutzer 3 erfolgt über Gesten. So kann der Benutzer 3 auf unterschiedliche Elemente zeigen, die vom Beamer der steuerbaren Anordnung 1 auf die Interaktionsfläche 3 projiziert werden. Durch das Zeigen auf diese Elemente und eventuell durch weitere Aktionen, wie zum Beispiel das kurze Ausharren über einem dieser Elemente, werden mit den Elementen verbundene Aktionen ausgelöst und die steuerbare Anordnung 1 dadurch gesteuert.

Eine Steuerung der steuerbaren Anlage 1 durch den Benutzer 3 kann auch bereits vor der Authentisierung des Benutzers 3 erfolgen. So kann insbesondere eine Geste zum Aufrufen der Authentisierung vorgesehen sein, durch die das oben beschriebene Authentisierungsverfahren aufgerufen und eingeleitet wird. Nach dem Ausführen dieser Geste zum Aufruf der Authentisierung erfolgt die Authentisierung des Benutzers 3 durch die steuerbare Anordnung 1.

Weiterhin lässt sich bei der beschriebenen Ausgestaltung der steuerbaren Anordnung 1 und des Verfahrens zur Steuerung dieser Anordnung sehr einfach eine Lebenderkennung implementieren, indem erkannt wird, ob sich ein Glied und insbesondere das Teil 4 des Gliedes bewegt. Bevorzugt wird dabei eine Bewegung in sich erkannt. So wird eine Authentisierung durch einfache, unbewegliche Kopien eines Körperteils des Benutzers 3 ausgeschlossen.

Allen Ausführungsformen der Erfindung ist der Vorteil zu Eigen, dass der Benutzer auf ganz intuitive Art, nämlich sprichwörtlich mit Händen und Füßen, mit der Anordnung kommunizieren kann. Die Interaktion betrifft dabei sowohl die Authentisierung, als auch die Steuerung der steuerbaren Anordnung.

## Patentansprüche

1. Steuerbare Anordnung, die durch berührungslose Erfassung eines Körperteils und/oder eines daran angeordneten Objekts steuerbar ist und bei der eine Authentisierung eines Benutzers (3) über ein Körperteil erfolgt,
**dadurch gekennzeichnet,**
**dass** die Anordnung (1) durch berührungslose Erfassung zumindest eines Teils (4) eines Gliedes oder eines daran angeordneten Objekts steuerbar und der Benutzer (3) durch zumindest einen Teil (4) eines Gliedes authentisierbar ist.

2. Steuerbare Anordnung nach Anspruch 1,
**dadurch gekennzeichnet,**
**dass** der Teil (4) eines Gliedes, durch den die Anordnung (1) steuerbar ist, sich am gleichen Glied befindet wie der Teil (4) eines Gliedes, durch den der Benutzer (3) authentisierbar ist.

3. Steuerbare Anordnung nach Anspruch 1 oder 2,
**dadurch gekennzeichnet,**
**dass** zumindest eines der Glieder eine Hand ist.

4. Steuerbare Anordnung nach zumindest Anspruch 3,
**dadurch gekennzeichnet,**
**dass** die Anordnung (1) Mittel zur Authentisierung durch eine Handerkennung aufweist.

5. Steuerbare Anordnung nach zumindest einem der vorstehenden Ansprüche,
**dadurch gekennzeichnet,**
**dass** die Anordnung (1) so eingerichtet ist, dass sie Gesten des Benutzers (3) identifizieren kann.

6. Steuerbare Anordnung nach zumindest einem der vorstehenden Ansprüche,
**dadurch gekennzeichnet,**
**dass** die Anordnung (1) durch die Gesten steuerbar ist.

7. Steuerbare Anordnung nach zumindest einem der vorstehenden Ansprüche,
**dadurch gekennzeichnet,**
**dass** der Benutzer (3) durch die Gesten authentisierbar ist.

8. Steuerbare Anordnung nach zumindest einem der vorstehenden Ansprüche,
**dadurch gekennzeichnet,**
**dass** die Anordnung (1) Aufnahmemittel zur Aufnahme zumindest eines der Teile (4) eines Gliedes aufweist.

9. Steuerbare Anordnung nach zumindest Anspruch 8,
**dadurch gekennzeichnet,**
**dass** die Aufnahmemittel Sensormittel für elektromagnetische Wellen oder Schallwellen aufweisen.

10. Steuerbare Anordnung nach zumindest Anspruch 8 oder 9,
**dadurch gekennzeichnet,**
**dass** die Anordnung (1) gleichartige Aufnahmemittel zur Aufnahme für den Teils (4) eines Gliedes aufweist, durch den die Anordnung (1) steuerbar ist, wie für den Teil (4) eines Gliedes, durch den der Benutzer (3) identifizierbar ist.

11. Steuerbare Anordnung nach zumindest Anspruch 10,
**dadurch gekennzeichnet,**
**dass** dieselben Aufnahmemittel sowohl für die Steuerung als auch für die Identifizierung verwendbar sind, indem die Anordnung (1) so eingerichtet ist, dass die Aufnahme der Aufnahmemittel sowohl für die Steuerung als auch für die Authentisierung auswertbar ist.

12. Verfahren zum Steuern einer Anordnung und zur Authentisierung eines Benutzers (3) der Anordnung (1), bei dem die Anordnung (1) durch berührungslose Erfassung eines Körperteils und/oder eines daran angeordneten Objekts gesteuert wird und bei dem die Authentisierung des Benutzers (3) über ein Körperteil erfolgt,
**dadurch gekennzeichnet,**
**dass** die Anordnung (1) durch zumindest einen Teil (4) eines Gliedes berührungslos gesteuert wird und der Benutzer durch zumindest einen Teil (4) eines Gliedes authentisiert wird.

13. Programmprodukt für eine Datenverarbeitungsanlage, das Softwarecodeabschnitte enthält, mit denen ein Verfahren nach Anspruch 12 auf einer Datenverarbeitungsanlage ausgeführt werden kann.
